# EUROPEAN PATENT SPECIFICATION

(11) **EP 3 729 687 B1**
(45) Date of publication and mention of the grant of the patent: **20.04.2022**
(21) Application number: 18782792.8
(22) Date of filing: 10.09.2018
(51) Int. Cl.: H04B 10/114, H04B 10/116

(54) **SYSTEM FOR TRANSMITTING DATA BY MEANS OF OPTICAL RADIATION BY MEANS OF DIFFUSION BY A PLURALITY OF SOURCES AND ASSOCIATED METHOD**
SYSTEM ZUR ÜBERTRAGUNG VON DATEN MITTELS OPTISCHER STRAHLUNG MITTELS DIFFUSION DURCH MEHRERE QUELLEN UND ZUGEHÖRIGES VERFAHREN
SYSTÈME DE TRANSMISSION DE DONNÉES PAR RAYONNEMENT OPTIQUE PAR DIFFUSION PAR UNE PLURALITÉ DE SOURCES ET PROCÉDÉ ASSOCIÉ

(30) Priority: 08.09.2017 CH 11222017
(43) Date of publication of application: 28.10.2020
(73) Proprietor: Slux Sagl, 6900 Lugano (CH)
(72) Inventor: PASQUALI, Alessandro, 6826 Riva San Vitale (CH)
(74) Representative: PGA S.p.A., Milano, Succursale di Lugano
(86) International application number: PCT/IB2018/056866
(87) International publication number: WO 2019/049087

(56) References cited:
- EP-A1- 2 579 618
- US-A- 4 163 123
- US-A1- 2010 040 241
- US-A1- 2015 276 399

## Description

### FIELD OF THE INVENTION

The present invention relates to the field of the transmission of optical radiation and, in detail, it relates to a system for transmitting data by means of optical radiation by a plurality of sources.

The present invention also relates to a method for diffusing data by means of optical radiation transmitted by a plurality of sources.

### BACKGROUND ART

The use of the electromagnetic spectrum in the field of radio frequencies for the transmission of electronic data, such as, for example, images or audio, is known. The transmission of electronic data on radio channels requires the allocation of a specific channel for each transmission, which cannot be shared, unless multiplexing techniques are employed.

The widespread diffusion of wireless transmissions for diffusing electronic data in broadcast mode, in simulcast mode or with transmissions selectively dedicated to a portion of the users, especially when observing the increase in the volumes of electronic data to be exchanged which has developed in the last few years, quickly saturated the radio channels previously available, forcing the technological community to search for new radio resources, i.e., bands of frequency, at ever higher frequencies, until reaching the microwave spectrum, to allow the transmission of electronic data on radio channels by employing broadband. A typical example are the radio transmission backbones for mobile phone signals, DAB radios, high-definition television signals, which use bands of frequency in the microwave region to have a plurality of adjacent channels, each of which having sufficient bandwidth for the type of transmission required.

The massive use of wireless radio transmission for transmitting electronic data has raised several problems. A first problem is that radio transmissions often use radio channels which are overlapped or, in any case, interfering with the transmission spectra of adjacent channels, or with other sources of interference geographically allocated in a position different with respect to those of interest.

The use of radio transmissions at very high frequencies is also subject to a considerable atmospheric absorption, the latter being, in fact, substantially increasing as the frequency in the radio frequency spectrum increases; consequently, to transmit electronic data on broadband at very high frequencies, it is typically necessary to employ significantly high transmission powers.

Furthermore, the use of particularly high radio frequencies especially for close transmissions and for consumer applications is currently the subject of debate in relation to harmfulness to health.

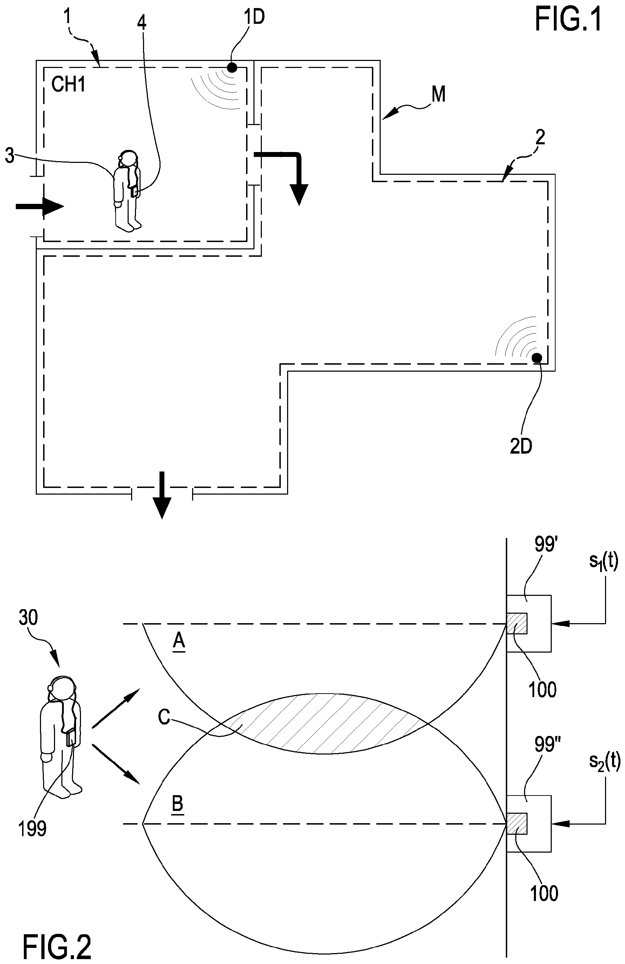

In the specific field of public entertainment, and with reference to the current audio-guide systems shown in Figure 1, the Applicant has found that in the transition between a first and a second environment 1, 2, for example of a museum M, users 3 equipped with a radio receiving device 4, especially if the first and second environments 1, 2 offer different themes, they must act on the commands of the radio receiver 4 to switch reception from a first channel CH1 of the first environment 1, diffused by a first diffusion source 1D and diffusing an audio signal relative to the first theme, to a second channel CH2 of the second environment 2, diffused by a second diffusion source 2D and diffusing an audio signal relative to the second theme.

Such switching is sudden and burdensome for the users 3, who must act manually on their own receiving device. The interaction with the themes offered in the museum is therefore somewhat cumbersome and artificial. Furthermore, if the users mistakenly switch to the wrong channel of the radio receiving device 4 thereof, the real risk is that they would lose the continuous thread of the themes between the first and second environment 1, 2 and not fully enjoy the museum experience.

Further audio-guide systems, on the other hand, offer a continuous diffusion of a same audio signal which evolves over time based on an estimated average travel time for the crossing of the first or of the second environment 1, 2. Also in this case, the system has some disadvantages. In particular, the Applicant has realized that if the users 3 stay longer than expected in the first or in the second environment 1, 2, the audio-guide system as described above is not capable of perceiving such stay for a time longer with respect to the average one calculated, and consequently continues diffusing a message to the radio receiving device supplied to the users which at that point is no longer consistent with the environment in which the users 3 are located. Once again, therefore, the interaction with the themes offered by the museum is artificial and highly optimisable.

US2010/040241 A1 (app.no. US 12/533,271) discloses a healthcare industry wireless audio system comprising a transmitter provided with a plurality of optical transmitting sources configured to communicate with a receiver provided with a sensor that convers the light based signal of the transmitting sources into an electric signal. US2010/040241 A1 discloses that the transmitter comprises a signal modulator providing an AM or a FM modulation.

It is the object of the present invention to describe a system and a method for diffusing electronic data by means of optical radiation by a plurality of sources which contribute to solving the drawbacks described above.

### SUMMARY OF THE INVENTION

The Applicant has observed that the adoption of a system for the transmission of data by means of optical radiation irradiated by a plurality of sources allows to reduce the drawbacks of data diffusions typical of radio communications, leaving the spectrum of radio waves, especially in the zone coincident with or close to the zone of interest, free for other applications.

The Applicant has also observed that the diffusion of multimedia signals, and in particular audio signals, through an amplitude modulated light radiation, in a system in which different audio signals are each diffused by an own source of optical radiation, allows a greater ease of interaction and of spatial and temporal immersion of the users in the environment where such audio signals are diffused, because no interaction is required with respect to the background art.

To achieve the above, the Applicant, according to a first aspect of the invention, has realised a system for diffusing audio signals by means of an optical radiation, in which said system is characterized in that it comprises:
- at least one first and one second optical transmitting module (99', 99"), each comprising at least one photoemitter (100) emitting an amplitude modulated optical radiation, said first and said second optical transmitting module transmitting a first and a second modulated optical radiation according to a first and respectively a second signal at least of the audio type (s1(t), s2(t));
- at least one optical receiving module, comprising:
- at least one photoreceiver (200) adapted to receive said amplitude modulated optical radiation from at least one of said optical transmitting modules (99', 99"),
- at least one AM demodulator (202), electrically connected to said at least one photoreceiver, configured to extract, in use, a replica of said audio signal transmitted through said at least one first and/or second optical transmitting module (99', 99"); in which said optical receiving module (199) is configured to generate, on at least one first output thereof, a replica electrical signal (s'(t)), replicating said signal at least of the audio type transmitted from said at least one first and/or second optical transmitting module (99', 99"), so that:
- if only the first optical radiation is received, it replicates, and/or is replicated, said first signal at least of the audio type;
- if only the second optical radiation is received, it replicates, and/or is replicated, said second signal at least of the audio type;
- if both the first optical radiation and the second optical radiation are received simultaneously, it replicates said first signal at least of the audio type (s1(t)) mixed with said second signal at least of the audio type (s2(t)), in which the at least instantaneous intensity of the replica of said first audio signal (s1(t)) and of the replica of said second signal at least of the audio type (s2(t)) is proportional respectively to the intensity of said first optical radiation and/or of the modulation thereof, and to the intensity of said second optical radiation and/or of the modulation thereof.

According to a second non-limiting aspect, said first and second signals at least of the audio type (s1(t), s2(t)) are transmitted simultaneously.

According to a third non-limiting aspect, the first and the second optical radiation are transmitted with a directive transmission.

According to a fourth non-limiting aspect, dependant on the aforesaid third aspect, in said directive transmission, said at least one photoemitter (100) of said at least one first and one second optical transmitting modules (99', 99") are directive photoemitters.

According to a fifth non-limiting aspect, dependant on one or more of the preceding aspects, said optical receiving module (199) is configured to replicate said first signal, at least of the audio type, mixed with said second signal, at least of the audio type, without interruption.

According to a sixth non-limiting aspect, dependant on one or more of the preceding aspects, said optical receiving module (199) has adjusting means (214) of the volume of said electrical signal replicating said audio signal transmitted through said at least one first and/or second optical transmitting module (99', 99").

According to a seventh non-limiting aspect, dependant on the preceding sixth aspect, said volume adjusting means (214) comprise an operative configuration in which they adjust the volume of said replica electrical signal (s'(t)) according to a proximity of said optical receiving module respectively to said first and/or second optical transmitting module (99', 99").

According to an eighth non-limiting aspect, dependant on one or more of the preceding sixth and seventh aspect, said volume adjusting means (214) comprise an operative configuration in which they adjust the volume of said electrical signal according to the light intensity or illuminance of, and/or produced by, said first optical radiation and/or said second optical radiation.

According to a ninth non-limiting aspect, dependant on one or more of the preceding sixth, seventh, eighth aspect, said adjusting means (214) of the volume of said electrical signal comprise a limiter or compressor, defining at least one level of envelope or light power or maximum illuminance above which the amplitude of said electrical signal is limited or increases with derivative unproportional law with a negative slope, also as the light intensity or illuminance of said first optical radiation and/or of said second optical radiation increases and/or as said optical receiving module approaches said first and/or second optical transmitting module.

According to a tenth non-limiting aspect, dependant on one or more of the preceding aspects, said optical receiving module (199) comprises a plurality of AM demodulators (202) selectively selectable by a user and placed in parallel.

According to an eleventh non-limiting aspect, dependant on one or more of the preceding aspects, each AM demodulator (202) is configured to demodulate a signal on a respective carrier with a frequency different with respect to the frequencies of the carriers of the remaining AM demodulators (202) of said plurality of AM demodulators.

According to a twelfth non-limiting aspect, dependant on one or more of the preceding tenth or eleventh aspect, said optical receiving module (199) comprises a filtering stage installed upstream of said plurality of AM demodulators (202).

According to a thirteenth non-limiting aspect, dependant on one or more of the preceding aspects, said first and said second optical transmitting modules (99', 99") are positioned in a fixed position and identify at least one interference zone (C) of the respective first and second optical radiations transmitted, and/or said first and/or second optical radiations interfere in a predetermined interference zone (C) and/or said photoemitter (100) of the first optical transmitting module (99') and said photoemitter (100) of the second optical transmitting module (99") identify an optical radiation interference region (C), optionally in said interference zone occurring the simultaneous receiving of the first and of the second optical radiation.

According to the present invention, and according to a fourteenth aspect, a method for diffusing data by means of an optical radiation transmitted by a plurality of sources is also realised, said method being characterized in that it comprises:
- a step of emitting a first amplitude modulated optical radiation, based on a first signal at least of the audio type (s1(t)) acting as modulating signal of said first amplitude modulated optical radiation,
- a step of emitting a second amplitude modulated optical radiation, based on a second signal at least of the audio type (s2(t)) acting as modulating signal of said second optical radiation,
- a step of positioning an optical receiving module (199) comprising at least one photoreceiver (200) adapted to receive said first and/or second optical radiation and at least one AM demodulator (202) electrically connected to said at least one photoreceiver (200), in a zone in which said first optical radiation and/or said second optical radiation are receivable and in which, through said AM demodulator (202), said optical receiving module (199) executes a step of generating a replica electrical signal (s'(t)) of said signal at least of the audio type transmitted by means of said first and/or of said second optical radiation, in which
- in said generating step:
   - if only the first optical radiation is received, said replica electrical signal (s'(t)) replicates said first signal at least of the audio type (s1(t));
   - if only the second optical radiation is received, said replica electrical signal (s'(t)) replicates said second signal at least of the audio type (s2(t));
   - if both the first optical radiation and the second optical radiation are received simultaneously, said replica electrical signal replicates said first signal at least of the audio type (s1(t)) mixed with said second signal at least of the audio type (s2(t)), in which the at least instantaneous intensity of the replica of said first signal at least of the audio type (s1(t)) and of the replica of said second signal at least of the audio type (s2(t)) is proportional respectively to the intensity of said first optical radiation and/or of the modulation thereof, and to the intensity of said second optical radiation and/or of the modulation thereof.

According to a fifteenth non-limiting aspect, dependant on said fourteenth aspect, said first and second audio signals are transmitted simultaneously.

According to a sixteenth non-limiting aspect, dependant on said fourteenth and/or on said fifteenth aspect, the first and the second amplitude modulated optical radiations are transmitted by a respective first and second optical transmitting module, in which said method comprises a step of positioning said first and said second optical transmitting module in two positions separate from each other.

According to a seventeenth non-limiting aspect, dependant on said sixteenth aspect, said step of positioning said first optical transmitting module (99') and said second optical transmitting module (99") comprises a step of positioning them in a position such that an optical radiation thereof is at least partly overlapped in at least one time interval, preferably and/or optionally in an overlap region (C) at which both the first optical radiation and the second optical radiation may be received simultaneously.

According to an eighteenth aspect, dependant on the sixteenth aspect and/or on said seventeenth aspect, said step of positioning said first optical transmitting module (99') and said second optical transmitting module (99") comprises a step of positioning them in a position whereby an optical radiation thereof has at least one overlapping lobe and/or is reciprocally interfering.

According to a nineteenth aspect, dependant on one or more of said fourteenth, or fifteenth, or sixteenth, or seventeenth, or eighteenth aspect, said first optical transmitting module (99') and said second optical transmitting module (99") are directive optical transmitting modules.

According to a twentieth non-limiting aspect, dependant on the aforesaid nineteenth aspect, in said directive transmission, said at least one photoemitter of said first and second optical transmitting modules are directive photoemitters.

According to a twenty-first non-limiting aspect, dependant on one or more of the preceding aspects from the fourteenth to the twentieth, said receiving module replicates said first signal at least of the audio type mixed with said second signal at least of the audio type without interruption.

According to a twenty-second non-limiting aspect, dependant on one or more of the preceding aspects from the fourteenth to the twenty-first, said method comprises a step of adjusting the volume of said replica electrical signal (s'(t)) replicating said signal at least of the audio type transmitted by said at least one first and/or one second optical transmitting module.

According to a twenty-third non-limiting aspect, dependant on the preceding twenty-second aspect, said step of adjusting the volume of said replica electrical signal comprises adjusting the volume according to a proximity of said optical receiving module (199) respectively to said first and/or second optical transmitting module (99', 99").

According to a twenty-fourth non-limiting aspect, dependant on one or more of the preceding aspects from the fourteenth to the twenty-third, the volume of said electrical signal is adjusted according to the light intensity or illuminance of, and/or produced by, said first optical radiation, and/or of, and/or produced by, said second optical radiation.

According to a twenty-fifth non-limiting aspect, dependant on one or more of the preceding twenty-second, twenty-third or twenty-fourth aspect, said step of adjusting the volume of said electrical signal comprises a step of adjusting a limiter or compressor, installed within said optical receiving module, so that, at least one level of envelope or light power or maximum illuminance is defined above which the amplitude of said electrical signal is limited or increases with derivative unproportional law with a negative slope, also as the light intensity or illuminance of said first optical radiation and/or of said second optical radiation increases and/or as said optical receiving module approaches said first and/or second optical transmitting module.

According to a twenty-sixth non-limiting aspect, dependant on any one of the preceding aspects from the fourteenth to the twenty-fifth, said method comprises a step of sourcing said first and/or said second audio signal from a power network.

In particular, the power network is the network to which said first and said second optical transmitting modules are electrically connected.

According to a twenty-seventh non-limiting aspect, dependant on the preceding twenty-sixth aspect, said method comprises a step of decoupling the aforesaid electrical signal first or second optical transmitting module by means of a decoupler configured to isolate at least part of the circuits of said first or second module of the mains voltage, following which only said audio signal may transit through the aforesaid decoupler.

For greater clarity, the following definitions apply to the present description.

According to the present invention, optical radiation means an optical radiation comprised in the infrared spectrum and/or in the ultraviolet spectrum and/or in the visible spectrum.

According to the present invention, direct optical radiation or direct optical transmission means a transmission of an optical radiation in which between a source or photoemitter and a destination or photoreceiver no optically opaque obstacles are interposed and no reflections are present. In other words, in the direct optical radiation or direct optical transmission, the transmission of the signals occurs with said source or photoemitter and the destination or photoreceiver being within the optical range, i.e., mutually visible.

For the purposes of a better understanding of the present invention, the following definitions apply:
- "Transparency" means a feature such that the material under examination may allow a radiation, which is incident thereon, to pass along a preferential direction, independently of the attenuation that such radiation undergoes in the passage through said material.
- "Infrared" means an electromagnetic radiation which has a wavelength approximately from 0.7 µm to 15 µm.
- "Visible" or "visible spectrum" means an electromagnetic radiation which has a wavelength approximately from 390 to 700 nm.
- "Ultraviolet" means an electromagnetic radiation which has a wavelength approximately from 400 nm to 10 nm.
- "Directive irradiation" or even only "directive", when referred to an optical and/or radio frequency radiation, means a radiation emitted by a radiator in the domain of interest - therefore, optical or radio frequency - in which a sector of the sphere of an otherwise isotropic radiator has a radiated electromagnetic power density which is higher with respect to the remaining sectors.

### BRIEF DESCRIPTION OF THE DRAWINGS

Some embodiments and some aspects of the invention are described below with reference to the accompanying drawings, only provided by way of indication and therefore not by way of limitation, in which:
- Figure 1 shows a block diagram of an audio-guide system of the known type, applied to an environment with two distinct thematic rooms, and operating through a diffusion of a radio signal towards a receiver;
- Figure 2 shows a block diagram of a system for diffusing audio signals through optical radiation according to the present invention;
- Figure 3 shows a block diagram of an optical receiving module employed in the system object of the invention;
- Figure 4 shows a block diagram of the reception, simultaneous or not, of a first and a second optical radiation, each carrying an own audio signal, in which several receivers are positioned in a position which is more or less close with respect to the position taken on by a plurality of optical transmitting modules;
- Figure 5 shows a diagram of the signal or optical radiation transmission in which a continuous component and a variable component is highlighted;
- Figure 6a and Figure 6b show diagrams of the limitation of the replica electrical signal volume obtained by means of an optical receiving module;
- Figure 7 shows a configuration of an optical receiving module in which several amplitude demodulators are present;
- Figure 8 shows a particular configuration of an optical transmitting module adapted to transmit amplitude modulated optical radiations with electrical audio signals transmitted on a domestic power network; and
- Figure 9 shows a particular configuration of a light bulb complete with said optical transmitting module.

### DETAILED DESCRIPTION OF THE INVENTION

As already briefly described in the summary of the present invention, the Applicant has devised a system for diffusing audio, and/or audio and video signals, and, in any case, preferably, multimedia signals, through a plurality of optical transmitting modules 99', 99", such that, through the AM modulation of the optical radiation 108 transmitted thereby, when moving an optical receiving module 199 in the interference zone between the optical radiations transmitted by the first module and by the second module, the audio signal perceived by the users presents a continuous mix over time of the audio signals respectively transmitted by the first and by the second optical transmitting module by means of the aforesaid optical radiation, which is a function of the position taken on substantially in real time by the optical receiving module 199.

As shown in Figure 2, the system object of the invention comprises at least one first and one second optical transmitting module 99', 99", each of which comprises at least one photoemitter 100 adapted, in use, to transmit an optical radiation 108 modulated in amplitude by an own AM modulator.

In detail, the photoemitter 100 may either be a consistent photoemitter - by "consistent" meaning a monochromatic photoemitter, as it may be a LASER - or an inconsistent one - by "inconsistent" meaning a photoemitter emitting a polychromatic optical beam, meaning, for example, of white light or of any colour, not distinguished by high spectral purity, such as, for example, a LED diode, and/or a SLED diode or an amplified spontaneous emission (ASE) diode. Preferably, but not by way of limitation, the photoemitter 100 has a passing band greater with respect to the band of the signal to be transmitted; by virtue of this aspect it is possible to avoid undesired frequency cut-off phenomena. For example, the diode employed to realise the photoemitter may be a broadband diode, for example doped with gallium nitride.

The first and the second optical transmitting modules 99', 99" are installed, in use, in a fixed position, for example, being built-in in a wall M, and are configured so as to receive, at respective inputs thereof, respectively a first and a second signal at least of the audio type s1(t), s2(t), which are analogue electrical signals, which, before being sent to the aforesaid at least one photoemitter 100, for each of the two optical transmitting modules 99', 99", are modulated in amplitude by means of the AM modulator of, therefore integrated in, each module. The first and the second signal at least of the audio type s1(t), s2(t) therefore represent modulating signals for the first and the second optical radiation. At least parts of the modulating stage may be realised as hardware or with a mixed hardware software structure or again as SDR, therefore purely as software, without such difference constituting a limitation for the purposes of the present invention.

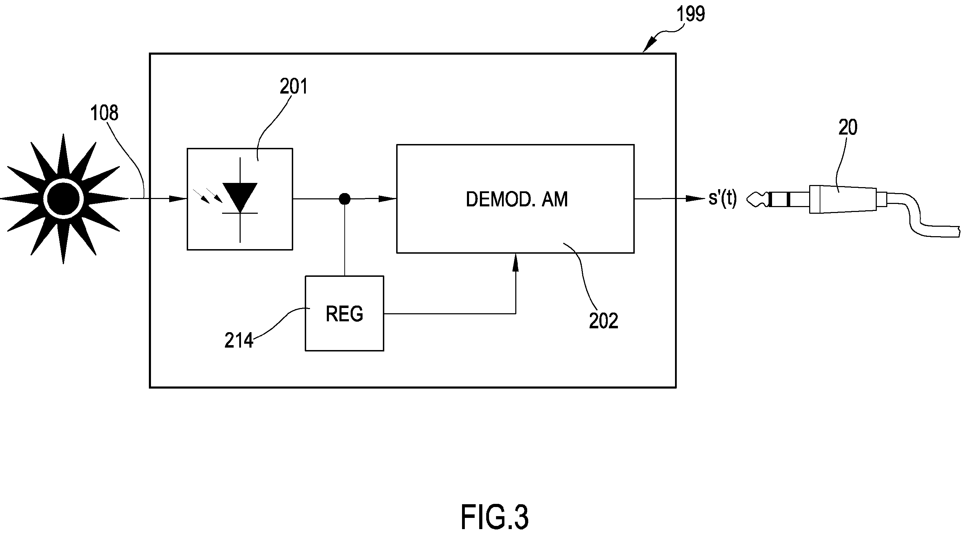

The system also comprises an optical receiving module 199, which preferably, but not by way of limitation, is small in size, is light, and is equipped - as shown in Figure 3 - with an output to which a plug 20 of a headset or of earphones, which the users 30, in use, wear, may conveniently be connected. On the output of the optical receiving module 199 a replica electrical signal s'(t) is transmitted, which is still an audio signal, but which - depending on the position taken on by the optical receiving module 199 with respect to the first and/or to the second optical transmitting module 99', 99" - presents a mix of the first and/or of the second audio signals s1(t), s2(t) according to the signal of said modulator.

The optical receiving module 199 has therewithin one or more photoreceivers 200, connected to an AM demodulator 202 which is electrically connected to the photoreceiver 200 and which is configured to extract, in use, the replica s'(t) of the audio signal or signals received through the optical radiation 108 transmitted by the optical transmitting modules. Parts of the demodulating stage may be realised as hardware or with a mixed hardware software structure or again as SDR, therefore purely as software, without such difference constituting a limitation for the purposes of the present invention. When several photoreceivers are present, these may be connected in parallel and may be selectively activated according to a predefined selective and simultaneous activation scheme or algorithm, whereby an increasing number of photoreceivers 200 is activated as the optical power received increases; such algorithm is conveniently managed and/or controlled by means of a data processing unit.

Figure 2 shows a simplified block diagram, in which the first and the second optical transmitting modules 99', 99" have each an at least primary radiation lobe - and alternatively a primary lobe and at least one plurality of side lobes - which therefore defines a directive optical radiation by the photoreceivers 200. Inside at least the primary lobe, which preferably, but not by way of limitation, has a maximum sectoral extension, the optical radiation power may not be uniform. The two at least primary lobes intersect each other, defining a volume - zone C in the Figure - in which a hypothetical optical receiving module 199, which is located inside, would receive both the first and the second optical radiation, being capable, in particular, of receiving them simultaneously.

In particular, the optical receiving module 199 is configured to generate on the output thereof said replica electrical signal s'(t) which replicates the audio signals or signals s1(t), s2(t) in the following manner.

If the optical receiving module 199 only receives the first optical radiation emitted by the first optical transmitting module 99', for example, due to the location thereof in the zone A, where substantially only this first optical radiation is received, the replica electrical signal s'(t) only replicates the content of the first signal at least of the audio type s1(t).

If the optical receiving module 199 only receives the second optical radiation emitted by the second optical transmitting module 99", for example, due to the location thereof in the zone B, where substantially only this optical radiation is received, the replica electrical signal s'(t) only replicates the content of the second signal at least of the audio type s2(t).

If the optical receiving module 199 is located in an area in which both the first and the second optical radiations are received, the optical receiving module 199 is configured to produce a replica electrical signal s'(t) in which the first signal at least of the audio type s1(t) is mixed with the second signal at least of the audio type s2(t) so that - once a point is fixed in which the optical receiving module 199 is located - the at least instantaneous intensity of the replica of the first audio signal and of the replica of the second signal at least of the audio type s1(t), s2(t) is proportional respectively to the intensity of said first optical radiation and/or of the modulation thereof, and to the intensity of said second optical radiation and/or of the modulation thereof.

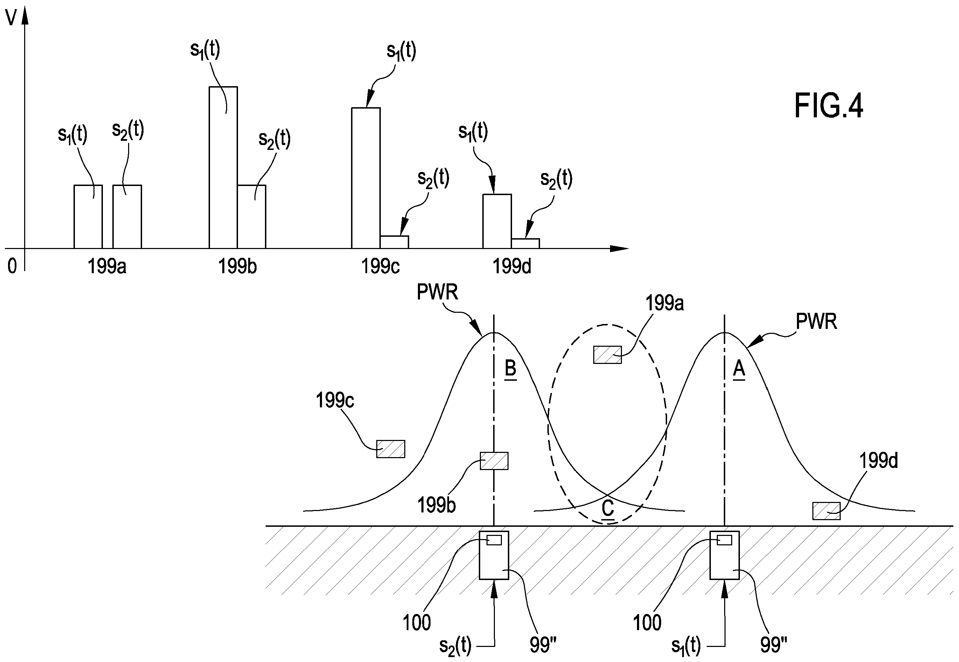

Such reception feature is even better shown in Figure 4, in which for the first and second optical transmitting modules 99', 99" a first and a second local power levels PWR of the optical radiation are identified, respectively emitted as a function of the angle of observation with respect to a primary direction of emission of the optical radiation of each of the photoemitters 100 of the first and second module. As in the case of Figure 2, the zone, or more precisely, the volume in which an hypothetical receiver receives both the optical radiations is define by letter C. Figure 4 shows four optical receiving modules 199a, 199b, 199c, 199d each of which is positioned in a determined position with respect to the first and to the second optical transmitting module 99', 99". A diagram at the top shows the relative envelope voltage levels corresponding to the at least instantaneous intensity of the replicas corresponding to the first and/or to the second audio signal s1(t), s2(t).

In detail, a first optical receiving module 199a is located in zone C, in which it receives, substantially with the same power level, both the first and the second optical radiation, since it is located at a substantially equal distance between the first and the second optical transmitting modules 99', 99". The second optical receiving module 199b is located much closer to the second optical transmitting module 99" than it is with respect to the first optical transmitting module 99', of which it still receives a faint optical power. Consequently, the replica of the first signal at least of the audio type s1(t) is received, and therefore transmitted to the output, in a much stronger manner with respect to the replica of the second signal at least of the audio type s2(t). The third optical receiving module 199c is located relatively close with respect to the second optical transmitting module 99" but very distant with respect to the first optical transmitting module 99'. The gap between the level of the replica of the first signal at least of the audio type s1(t) and of the second signal at least of the audio type s2(t) is even more marked and the optical radiation corresponding to the latter is received at a power just above zero, and, consequently, accordingly replicated at output. Finally, the fourth optical receiving module 199d is positioned in a position relatively remote with respect to the first optical transmitting module 99' and very remote with respect to the second optical transmitting module 99". The position thereof, rather close to the wall, causes the relative proximity to the first optical transmitting module 99' to be compensated in negative by such closeness. Consequently, the power of the optical radiation coming from the first optical transmitting module 99' is limited mainly by this factor, while the power of the optical radiation coming from the second optical transmitting module 99" is limited - in addition - also by the relative distance.

A further feature of the invention as devised by the Applicant is therefore a method for diffusing data by means of an optical radiation transmitted by a plurality of sources. The method for diffusing data comprises:
- a step of emitting a first amplitude modulated optical radiation, based on the first signal, at least of the audio type s1(t), which is transmitted at input to the optical transmitting module as previously described, and which therefore acts as modulating signal for the first optical radiation;
- a step of emitting a second amplitude modulated optical radiation, based on the second signal, at least of the audio type s2(t), which is transmitted at input to the second optical transmitting module 99" as previously described, and which therefore acts as modulating signal for the second optical radiation;
- a step of positioning at least one optical receiving module 199, 199a, 199b, 199c, 199d in a zone close to the first and/or to the second optical transmitting module 99', 99" such that the first and/or the second optical radiations may be received, which are - as already described above - transmitted with a directive transmission.

The optical receiving module 199 executes an operation of electro-optical conversion of the signal corresponding to the first and/or second optical radiation received by means of the at least one photoreceiver 200 thereof, such that a replica electrical signal of the signal at least of the audio type s1(t) and/or s2(t) is generated in the following manner: if only the first optical radiation is received, the replica electrical signal s'(t) only replicates the first signal at least of the audio type s1(t); if only the second optical radiation is received, the replica electrical signal s'(t) only replicates the second signal at least of the audio type s2(t); if both the first and the second optical radiation signals are received simultaneously, the replica electrical signal s'(t) will replicate the first signal at least of the audio type mixed with the second signal at least of the audio type, so that the instantaneous intensity of the replica of the first signal at least of the audio type s1(t) and of the replica of the second signal at least of the audio type s2(t) will be proportional to the intensity respectively of the first optical radiation which carries and/or modulates the first signal at least of the audio type and of the second optical radiation which carries and/or modulates the second signal at least of the audio type.

The diagram of Figure 4 may also be interpreted in the manner in which the four optical receiving modules 199 are actually a single module which moves over time, and the reader shall imagine that, therefore, in a hypothetical path defined by the positions taken on by the first, second, third and fourth optical receiving modules 199a, b, c, d, the powers taken on by the first and second optical radiations 190, and consequently the powers with which the replicas of the first and of the second signals at least of the audio type s1(t), s2(t) are reproduced to form the replica electrical signal s'(t), vary over time without interruption during the aforesaid displacement. In other words, "without interruption" means that, during the displacement of the optical receiving module, the powers with which the replicas of the first and of the second signals at least of the audio type s1(t), s2(t) are reproduced, to form the replica electrical signal s'(t), are adjusted in a manner continuous, substantially in real time - compatibly with the delay introduced by the circuits at least of the AM demodulator-with the aforesaid displacement, preferably, but not by way of limitation, between a null minimum value and a predefined maximum value.

Summing up, therefore, the photoreceiver 200 present on each optical receiving module 199 is conventionally constructed so as to highlight and/or measure the at least average and/or instantaneous value of the optical transmission power, or optical radiation intensity, thus highlighting the variations over time thereof. The optical receiving module 199 thus associates the power of the optical radiation received with the power with which - once correctly extracted by means of the AM demodulator - the replicas of the first and/or of the second signals at least of the audio type s1(t), s2(t) are reproduced at output, so as to create the aforesaid replica electrical signal s'(t).

In practical terms, since the output of the optical receiving module transmits a replica electrical signal adapted to be sent to a headset or earphones worn by the users 30, such powers therefore express the "volume" with which the signal is received. For such reason, in the claims, reference is made precisely to such volume, where volume means the power that the signal takes on in a relatively instantaneous time interval, however, not reduced to such an extent as to include the peak variations due to the own shape of the modulator.

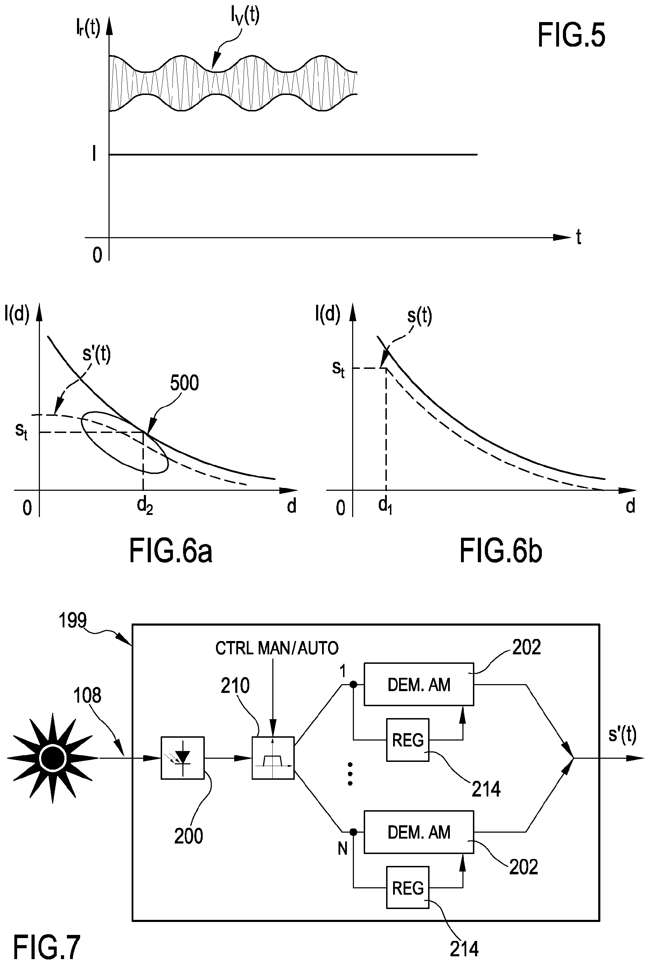

The Applicant has also observed that in the transmission of audio signals, a peculiar feature is represented by the need to maintain and/or search for a slight distortion, in particular a harmonic distortion, so as to keep the features of the replica of an audio signal intact with respect to the original. It has therefore been observed that - especially in the case of photoemitters 100 of the LED type, it is convenient to operate in the linearity zone; conveniently, as diagrammatically shown in Figure 5, in a particular embodiment, preferably but not by way of limitation, the photoemitter is powered so as to provide a base I of light intensity or illuminance in the absence of a modulating signal (s1(t) or s2(t) =0), and to have a modulation in which the variable component over time Iv(t) of the light intensity emitted by the photoemitter is such that in the presence of modulation depths equal to 100%, the minimum level taken on by the light intensity still guarantees to work under linearity conditions.

Since conventional photoreceivers 200 are sensitive to illuminance (measured in Lux), which is a function of the distance d between an optical receiver and an optical transmitter, or brightness, the Applicant has found that, as an optical receiving module approaches or is approached by a light source along a same rectilinear direction, the photoreceiver 200 thereof emits a voltage or current signal which increasingly grows as the light source approaches it. For such reason, when demodulating, this would lead to have a volume of the replica electrical signal s'(t) which is increasingly higher the closer the source is. To avoid saturation phenomena and/or to avoid damage to the users, the Applicant has devised a particular embodiment of the optical receiving module 199 which includes means for adjusting the volume of the replica electrical signal s'(t), diagrammatically shown in Figure 3 with the stage numbered with reference numeral 214. Such volume adjusting stage 214 has at least one first operative configuration in which it does not act on the variation of the volume of the replica electrical signal s'(t), and a second operative configuration in which it acts as a stage of adjusting or limiting the volume that the replica electrical signal s'(t) may take on. In essence, the volume adjusting stage 214 has stored, therewithin, an envelope or light power or maximum illuminance level above which the amplitude of the replica electrical signal s'(t), even as the illuminance and/or light power of the first optical radiation and/or second optical radiation thereof increases, is kept constant - operating with a knee limitation - or alternatively is increased with derivative unproportional law having a negative slope. Both these solutions are shown in Figures 6a and 6b, in which the illuminance Ir(d) is indicated as a function of the distance d which separates the optical receiving module from an optical transmitting module and the average voltage of the replica electrical signal s'(t); in the diagram of Figure 6a, a compression with negative derivative or having a negative slope (zone 500) is shown while in the diagram of Figure 6b a knee limitation is shown. In both cases, the envelope or light power or maximum illuminance level is indicated with st.

In a further non-limiting embodiment, shown in detail in Figure 7, the optical receiving module comprises a plurality of AM demodulators 202 selectively selectable by the users by means of a common command which may be hardware or interacting with a software controller. In such embodiment, the optical receiving module 199 also comprises a filter, installed between the photoreceiver 200 and the AM demodulators 202, having an input powered by the photoreceiver 200 and a plurality of outputs, each powering a respective AM demodulator 202. Such configuration is useful for filtering the optical radiation on different carriers and for causing the AM demodulation of the optical radiation, so that each AM demodulator 202, among the N available, demodulates a signal which is centred on a carrier f_{ci} i=1,...,N in which the fcᵢ carriers are separate from one another. The various fci carriers will be appropriately selected so as not to interfere with each other with the passing bands of the respective modulating audio signals. Also in the case of the embodiment described herein, for each AM demodulator 202, volume adjusting and limiting stages are present as previously described.

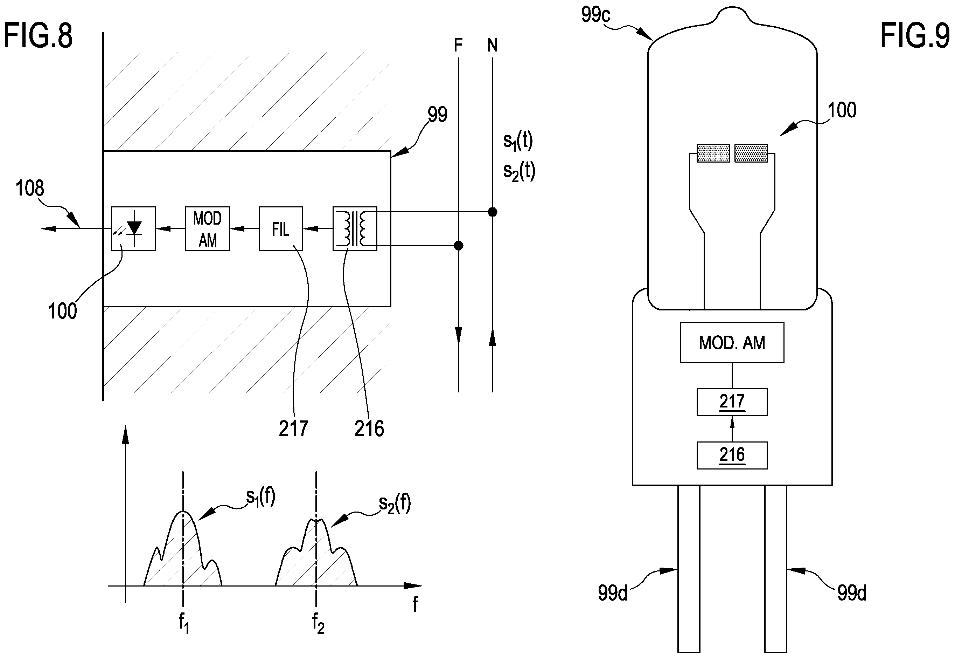

The Applicant has also found that the audio signals s1(t) and s2(t) may be transported towards the first or the second optical transmitting module 99', 99" by means of power lines. In other words, the first and the second optical transmitting modules 99', 99" may be powered by the domestic power network. In such case, as shown in Figure 8, they have decouplers 216 which execute a decoupling of the high-voltage portion - in this case, meaning the mains voltage - from the remaining circuits of the optical transmitting module and, in particular, from the AM modulator and the photoemitter 100. The first and second audio signals s1(t), s2(t) are therefore transmitted in a transmission step on the power network to which the first optical transmitting module and the second optical transmitting module 99', 99" are connected, as signals overlapped to the electricity transported in alternate current at 50Hz or 60Hz according to current standards. The decouplers 216, preferably voltage-reducing transformers equipped with an input and an output, allow the electricity components relative to the first and second audio signals s1(t), s2(t) to pass on the outputs thereof - or secondary stages - since they do not filter them. Suitable filters 217, downstream of each decoupler 216, alternatively filter one of the two different frequency carriers on which the first audio signal s1(t) and the second audio signal s2(t) are respectively centred.

Finally, the Applicant has observed that a particular embodiment of the optical transmitting module may be in the form of a light bulb as shown in Figure 9, which integrates a body 99c with a transparent surface 99c adapted to irradiate an optical radiation in the visible, infrared or ultraviolet frequencies domain, and which faces the at least one photoemitter 100 and a portion comprising electrical contacts 99d for powering said light bulb, in which, in the body 99c, the AM modulator for the audio signal received by means of power lines, the decoupler 216 and the filters 217 are installed. Advantageously, the Applicant has found that, in the case of an integrated embodiment, it is possible to sell a single, replaceable device which presents the "intelligence" of converting an audio signal in an AM modulated optical signal in a single element. The shape of the light bulb shown in Figure 9 is not meant in a limitative manner.

It is finally apparent that additions, modifications or variations obvious to a person skilled in the art may apply to the object of the present invention, without thereby departing from the scope of protection provided by the accompanying claims.

## Claims

1. A system for diffusing audio signals by means of an optical radiation, comprising:
- at least one first and one second optical transmitting module (99', 99"), each comprising at least one photoemitter (100) emitting an amplitude modulated optical radiation, said first and said second optical transmitting module (99', 99") transmitting a first and a second modulated optical radiation according to a first and respectively a second signal at least of the audio type (s1(t), s2(t));
- at least one optical receiving module (199), comprising:
- at least one photoreceiver (200) adapted to receive said amplitude modulated optical radiation from at least one of said optical transmitting modules (99', 99"),
- at least one AM demodulator (202), electrically connected to said at least one photoreceiver (200), configured to extract, in use, a replica of said audio signal transmitted through said at least one first and/or second optical transmitting module (99', 99"); wherein said optical receiving module (199) is configured to generate, on at least one first output thereof, a replica electrical signal (s'(t)), replicating said signal at least of the audio type transmitted from said at least one first and/or second optical transmitting module, so that:
- if only the first optical radiation is received, it replicates said first signal at least of the audio type (s1(t));
- if only the second optical radiation is received, it replicates said second signal at least of the audio type (s2(t));
the system being **characterized in that**
- if both the first optical radiation and the second optical radiation are received simultaneously, it replicates said first signal at least of the audio type (s1(t)) mixed with said second signal at least of the audio type (s2(t)), wherein the at least instantaneous intensity of the replica of said first signal at least of the audio type (s1(t)) and of the replica of said second signal at least of the audio type (s2(t)) is proportional respectively to the intensity of said first optical radiation and/or of the modulation thereof, and to the intensity of said second optical radiation and/or of the modulation thereof.

2. A system according to claim 1, wherein said first and second signals (s1(t), (s2(t)) are transmitted simultaneously.

3. A system according to claim 1 or to claim 2, wherein the first and the second optical radiation are transmitted with a directive transmission and wherein said first and said second optical transmitting modules (99', 99") are positioned in a fixed position and identify at least one interference zone of the respective first and second optical radiation transmitted.

4. A system according to any one of the preceding claims, wherein said optical receiving module (199) is configured to replicate said first signal (s1(t)) mixed with said second signal (s2(t)) without interruption, and/or wherein said optical receiving module (199) has adjusting means (214) for the volume of said electrical signal replicating said audio signal transmitted through said at least one first and/or second optical transmitting module (99', 99"), wherein said volume adjusting means (214) comprise an operative configuration wherein they adjust the volume of said replica electrical signal (s'(t)) according to a proximity of said optical receiving module respectively to said first and/or second optical transmitting module (99', 99").

5. A system according to claim 4, wherein said volume adjusting means (214) comprise an operative configuration wherein they adjust the volume of said replica electrical signal (s'(t)) according to the light intensity or illuminance of, and/or produced by, said first optical radiation and/or said second optical radiation.

6. A system according to any one of claims 4 or 5, wherein said adjusting means (214) of the volume of said replica electrical signal (s'(t)) comprise a limiter or compressor, defining at least one level of envelope or light power or maximum illuminance above which the amplitude of said electrical signal is limited or increases with derivative unproportional law with a negative slope, also as the light intensity or illuminance of said first optical radiation and/or of said second optical radiation increases and/or as said optical receiving module approaches said first and/or second optical transmitting module.

7. A system according to any one of the preceding claims, wherein said optical receiving module (199) comprises a plurality of AM demodulators (202) selectively selectable by a user and placed in parallel, wherein each AM demodulator (202) is configured to demodulate a signal on a respective carrier with a frequency different with respect to the frequencies of the carriers of the remaining AM demodulators of said plurality of AM demodulators (202).

8. A system according to claim 7, wherein said optical receiving module (199) comprises a filtering stage (217) installed upstream of said plurality of AM demodulators (202).

9. A method for diffusing data by means of an optical radiation transmitted by a plurality of sources, comprising:
- a step of emitting a first amplitude modulated optical radiation, based on a first signal at least of the audio type (s1(t)) acting as modulating signal of said first amplitude modulated optical radiation;
- a step of emitting a second amplitude modulated optical radiation, based on a second signal at least of the audio type (s2(t)) acting as modulating signal of said second optical radiation, wherein said first and said second audio signals (s1(t), s2(t)) are transmitted simultaneously;
- a step of positioning an optical receiving module (199) comprising at least one photoreceiver (200) adapted to receive said first and/or second optical radiation and at least one AM demodulator (202) electrically connected to said at least one photoreceiver (200), in a zone wherein said first optical radiation and/or said second optical radiation are receivable and wherein, through said AM demodulator (202), said optical receiving module (199) executes a step of generating a replica electrical signal (s'(t)) of said signal at least of the audio type transmitted by means of said first and/or of said second optical radiation, wherein
- in said generating step:
- if only the first optical radiation is received, said replica electrical signal (s'(t)) replicates said first signal at least of the audio type (s1(t));
- if only the second optical radiation is received, said replica electrical signal (s'(t)) replicates said second signal at least of the audio type (s2(t));
the method being **characterized in that**, in said generating step,
- if both the first optical radiation and the second optical radiation are received simultaneously, said replica electrical signal replicates said first signal at least of the audio type (s1(t)) mixed with said second signal at least of the audio type (s2(t)), wherein the at least instantaneous intensity of the replica of said first signal at least of the audio type (s1(t)) and of the replica of said second signal at least of the audio type (s2(t)) is proportional respectively to the intensity of said first optical radiation and/or of the modulation thereof, and to the intensity of said second optical radiation and/or of the modulation thereof.

10. A method according to claim 9, wherein the first and the second amplitude modulated optical radiations are transmitted by a respective first and second optical transmitting module (99', 99"), wherein said method comprises a step of positioning said first and said second optical transmitting module (99', 99") in two positions separate from each other.

11. A method according to claim 10, wherein said step of positioning said first optical transmitting module (99') and said second optical transmitting module (99") comprises a step of positioning them in a position such that an optical radiation thereof is at least partly overlapped in at least one time interval, optionally in an overlap region (C) at which both the first optical radiation and the second optical radiation may be received simultaneously.

12. A method according to claim 10 or to claim 11, wherein said step of positioning said first optical transmitting module (99') and said second optical transmitting module (99") comprises a step of positioning them in a position whereby an optical radiation thereof has at least one overlapping lobe and/or is reciprocally interfering.

13. A method according to one or more of the preceding claims 9 to 12, wherein said receiving module replicates said first signal at least of the audio type mixed with said second signal at least of the audio type without interruption.

14. A method according to any one of claims 10 to 13, comprising a step of adjusting the volume of said replica electrical signal (s'(t)) replicating said signal at least of the audio type transmitted by said at least one first and/or one second optical transmitting module (99', 99"), wherein said step of adjusting the volume of said replica electrical signal comprises adjusting the volume according to a proximity of said optical receiving module (199) respectively to said first and/or second optical transmitting module (99', 99").

15. A method according to claim14, wherein the volume of said electrical signal is adjusted according to the light intensity or illuminance of, and/or produced by, said first optical radiation, and/or of, and/or produced by, said second optical radiation.

## Patentansprüche

1. System zum Verbreiten von Audiosignalen mittels einer optischen Strahlung, umfassend:
- wenigstens ein erstes und ein zweites optisches Übertragungsmodul (99', 99"), welche jeweils wenigstens einen Photoemitter (100) umfassen, welcher eine amplitudenmodulierte optische Strahlung emittiert, wobei das erste und das zweite optische Übertragungsmodul (99', 99") eine erste und eine zweite modulierte optische Strahlung gemäß einem ersten bzw. einem zweiten Signal wenigstens des Audiotyps (s1(t), s2(t)) übertragen;
- wenigstens ein optisches Empfangsmodul (199), umfassend:
- wenigstens einen Photoempfänger (200), welcher dazu eingerichtet ist, die amplitudenmodulierte optische Strahlung von wenigstens einem der optischen Übertragungsmodule (99', 99") zu empfangen,
- wenigstens einen AM-Demodulator (202), welcher elektrisch mit dem wenigstens einen Photoempfänger (200) verbunden ist und dazu eingerichtet ist, in Verwendung eine Nachbildung des durch das wenigstens eine erste und/oder zweite optische Übertragungsmodul (99', 99") übertragenen Audiosignals zu extrahieren; wobei das optische Empfangsmodul (199) dazu eingerichtet ist, an wenigstens einem ersten Ausgang davon ein elektrisches Nachbildungssignal (s'(t)) zu erzeugen, welches das von dem wenigstens einen ersten und/oder zweiten optischen Übertragungsmodul übertragene Signal wenigstens des Audio-Typs nachbildet, so dass:
- wenn nur die erste optische Strahlung empfangen wird, es das erste Signal wenigstens des Audio-Typs (s1(t)) nachbildet;
- wenn nur die zweite optische Strahlung empfangen wird, es das zweite Signal wenigstens des Audio-Typs (s2(t)) nachbildet;
wobei das System **dadurch gekennzeichnet ist, dass**,
- wenn sowohl die erste optische Strahlung als auch die zweite optische Strahlung gleichzeitig empfangen werden, es das erste Signal wenigstens des Audio-Typs (s1(t)) gemischt mit dem zweiten Signal wenigstens des Audio-Typs (s2(t)) nachbildet, wobei die wenigstens momentane Intensität der Nachbildung des ersten Signals wenigstens des Audio-Typs (s1(t)) und der Nachbildung des zweiten Signals wenigstens des Audio-Typs (s2(t)) zu der Intensität der ersten optischen Strahlung und/oder der Modulation davon bzw. zu der Intensität der zweiten optischen Strahlung und/oder der Modulation davon proportional ist.

2. System nach Anspruch 1, wobei das erste und das zweite Signal (s1(t), s2(t)) gleichzeitig übertragen werden.

3. System nach Anspruch 1 oder Anspruch 2, wobei die erste und die zweite optische Strahlung mit einer gerichteten Übertragung übertragen werden und wobei das erste und das zweite optische Übertragungsmodul (99', 99") in einer festen Position positioniert sind und wenigstens einen Interferenzbereich der übertragenen ersten bzw. zweiten optischen Strahlung identifizieren.

4. System nach einem der vorhergehenden Ansprüche, wobei das optische Empfangsmodul (199) dazu eingerichtet ist, das erste Signal (s1(t)) gemischt mit dem zweiten Signal (s2(t)) ohne eine Unterbrechung nachzubilden, und/oder wobei das optische Empfangsmodul (199) Einstellmittel (214) für das Volumen des elektrischen Signals aufweist, welches das durch das wenigstens eine erste und/oder zweite optische Übertragungsmodul (99', 99") übertragene Audiosignal nachbildet, wobei die Volumeneinstellmittel (214) eine Betriebskonfiguration umfassen, wobei sie das Volumen des elektrischen Nachbildungssignals (s'(t)) gemäß einer Nähe der optischen Empfangseinheit jeweils zu dem ersten und/oder dem zweiten optischen Übertragungsmodul (99', 99") einstellen.

5. System nach Anspruch 4, wobei die Volumeneinstellmittel (214) eine Betriebskonfiguration umfassen, wobei sie das Volumen des elektrischen Nachbildungssignals (s'(t)) gemäß der Lichtintensität oder der Beleuchtungsstärke der ersten optischen Strahlung und/oder der zweiten optischen Strahlung, und/oder dadurch erzeugt, einstellen.

6. System nach einem der Ansprüche 4 oder 5, wobei die Einstellmittel (214) des Volumens des elektrischen Nachbildungssignals (s'(t)) einen Begrenzer oder Kompressor umfassen, welcher wenigstens ein Niveau einer Hüllkurve oder einer Lichtleistung oder einer maximalen Beleuchtungsstärke definiert, über welchem die Amplitude des elektrischen Signals begrenzt ist oder mit einem abgeleiteten unproportionalen Gesetz mit einer negativen Steigung zunimmt, auch wenn die Lichtintensität oder die Beleuchtungsstärke der ersten optischen Strahlung und/oder der zweiten optischen Strahlung zunimmt und/oder wenn sich das optische Empfangsmodul dem ersten und/oder dem zweiten optischen Übertragungsmodul nähert.

7. System nach einem der vorhergehenden Ansprüche, wobei das optische Empfangsmodul (199) eine Mehrzahl von AM-Demodulatoren (202) umfasst, welche selektiv durch einen Benutzer auswählbar sind und parallel angeordnet sind, wobei jeder AM-Demodulator (202) dazu eingerichtet ist, ein Signal an einem jeweiligen Träger mit einer Frequenz zu demodulieren, welche in Bezug auf die Frequenzen der Träger der verbleibenden AM-Demodulatoren der Mehrzahl von AM-Demodulatoren (202) verschieden ist.

8. System nach Anspruch 7, wobei das optische Empfangsmodul (199) eine Filterstufe (217) umfasst, welche der Mehrzahl von AM-Demodulatoren (202) vorgelagert installiert ist.

9. Verfahren zum Verbreiten von Daten mittels einer durch eine Mehrzahl von Quellen übertragenen optischen Strahlung, umfassend:
- einen Schritt eines Emittierens einer ersten amplitudenmodulierten optischen Strahlung auf Grundlage eines ersten Signals wenigstens des Audio-Typs (s1(t)), welches als ein Modulationssignal der ersten amplitudenmodulierten optischen Strahlung wirkt;
- einen Schritt eines Emittierens einer zweiten amplitudenmodulierten optischen Strahlung auf Grundlage eines zweiten Signals wenigstens des Audio-Typs (s2(t)), welches als ein Modulationssignal der zweiten optischen Strahlung wirkt, wobei das erste und das zweite Audiosignal (s1(t), s2(t)) gleichzeitig übertragen werden;
- einen Schritt eines Positionierens eines optischen Empfangsmoduls (199), welches wenigstens einen Photoempfänger (200), welcher dazu eingerichtet ist, die erste und/oder die zweite optische Strahlung zu empfangen, und wenigstens einen AM-Demodulator (202) umfasst, welcher elektrisch mit dem wenigstens einen Photoempfänger (200) in einem Bereich verbunden ist, worin die erste optische Strahlung und/oder die zweite optische Strahlung empfangbar sind, und wobei das optische Empfangsmodul (199) durch den AM-Demodulator (202) einen Schritt eines Erzeugens eines elektrischen Nachbildungssignals (s'(t)) des mittels der ersten und/oder der zweiten optischen Strahlung übertragenen Signals wenigstens des Audio-Typs ausführt, wobei
- in dem Erzeugungsschritt:
- wenn nur die erste optische Strahlung empfangen wird, das elektrische Nachbildungssignal (s'(t)) das erste Signal wenigstens des Audio-Typs (s1(t)) nachbildet;
- wenn nur die zweite optische Strahlung empfangen wird, das elektrische Nachbildungssignal (s'(t)) das zweite Signal wenigstens des Audio-Typs (s2(t)) nachbildet;
wobei das Verfahren **dadurch gekennzeichnet ist, dass** in dem Erzeugungsschritt,
- wenn sowohl die erste optische Strahlung als auch die zweite optische Strahlung gleichzeitig empfangen werden, das elektrische Nachbildungssignal das erste Signal wenigstens des Audio-Typs (s1(t)) gemischt mit dem zweiten Signal wenigstens des Audio-Typs (s2(t)) nachbildet, wobei die wenigstens momentane Intensität der Nachbildung des ersten Signals wenigstens des Audio-Typs (s1(t)) und der Nachbildung des zweiten Signals wenigstens des Audio-Typs (s2(t)) zu der Intensität der ersten optischen Strahlung und/oder der Modulation davon bzw. zu der Intensität der zweiten optischen Strahlung und/oder der Modulation davon proportional ist.

10. Verfahren nach Anspruch 9, wobei die erste und die zweite amplitudenmodulierte optische Strahlung durch ein erstes bzw. ein zweites optisches Übertragungsmodul (99', 99") übertragen werden, wobei das Verfahren einen Schritt eines Positionierens des ersten und des zweiten optischen Übertragungsmoduls (99', 99") in zwei voneinander getrennten Positionen umfasst.

11. Verfahren nach Anspruch 10, wobei der Schritt des Positionierens des ersten optischen Übertragungsmoduls (99') und des zweiten optischen Übertragungsmoduls (99") einen Schritt eines Positionierens derselben in einer derartigen Position umfasst, dass eine optische Strahlung davon in wenigstens einem Zeitintervall wenigstens teilweise überlappt ist, optional in einem Überlappungsbereich (C), in welchem sowohl die erste optische Strahlung als auch die zweite optische Strahlung gleichzeitig empfangen werden können.

12. Verfahren nach Anspruch 10 oder Anspruch 11, wobei der Schritt des Positionierens des ersten optischen Übertragungsmoduls (99') und des zweiten optischen Übertragungsmoduls (99") einen Schritt eines Positionierens derselben in einer Position umfasst, wobei eine optische Strahlung davon wenigstens einen Überlappungslappen aufweist und/oder wechselseitig interferiert.

13. Verfahren nach einem oder mehreren der vorhergehenden Ansprüche 9 bis 12, wobei das Empfangsmodul das erste Signal wenigstens des Audio-Typs gemischt mit dem zweiten Signal wenigstens des Audio-Typs ohne eine Unterbrechung nachbildet.

14. Verfahren nach einem der Ansprüche 10 bis 13, umfassend einen Schritt eines Einstellens des Volumens des elektrischen Nachbildungssignals (s'(t)), welches das durch das wenigstens eine erste und/oder zweite optische Übertragungsmodul (99', 99") übertragene Signal wenigstens des Audio-Typs nachbildet, wobei der Schritt des Einstellens des Volumens des elektrischen Nachbildungssignals ein Einstellen des Volumens gemäß einer Nähe der optischen Empfangseinheit (199) jeweils zu dem ersten und/oder dem zweiten optischen Übertragungsmodul (99', 99") umfasst.

15. Verfahren nach Anspruch 14, wobei das Volumen des elektrischen Signals gemäß der Lichtintensität oder der Beleuchtungsstärke der ersten optischen Strahlung, und/oder dadurch erzeugt, und/oder der zweiten optischen Strahlung, und/oder dadurch erzeugt, eingestellt wird.

## Revendications

1. Système de diffusion de signaux audio à l'aide d'un rayonnement optique, comprenant :
- au moins un premier et un second module de transmission optique (99', 99"), comprenant chacun au moins un photoémetteur (100) émettant un rayonnement optique modulé en amplitude, ledit premier et ledit second module de transmission optique (99', 99") transmettant un premier et un second rayonnement optique modulés selon un premier et respectivement un second signal au moins du type audio (s1(t), s2(t)) ;
- au moins un module de réception optique (199), comprenant :
- au moins un photorécepteur (200) adapté pour recevoir ledit rayonnement optique modulé en amplitude à partir d'au moins l'un desdits modules de transmission optique (99', 99"),
- au moins un démodulateur AM (202), électriquement connecté audit au moins un photorécepteur (200), conçu pour extraire, durant l'utilisation, une réplique dudit signal audio transmis à travers ledit au moins un premier et/ou un second module de transmission optique (99', 99") ; ledit module de réception optique (199) étant conçu pour générer, sur au moins une première sortie de celui-ci, un signal électrique de réplique (s'(t)), répliquant ledit signal au moins du type audio transmis à partir dudit au moins un premier et/ou un second module de transmission optique, de sorte que :
- si seulement le premier rayonnement optique est reçu, il réplique ledit premier signal au moins du type audio (s1(t)) ;
- si seulement le second rayonnement optique est reçu, il réplique ledit second signal au moins du type audio (s2(t)) ;
le système étant **caractérisé en ce que**
- si à la fois le premier rayonnement optique et le second rayonnement optique sont reçus simultanément, il réplique ledit premier signal au moins du type audio (s1(t)) mixé avec ledit second signal au moins du type audio (s2(t)),
dans lequel la au moins intensité instantanée de la réplique dudit premier signal au moins du type audio (s1(t)) et de la réplique dudit second signal au moins du type audio (s2(t)) est respectivement proportionnelle à l'intensité dudit premier rayonnement optique et/ou de la modulation de celui-ci, et à l'intensité dudit second rayonnement optique et/ou de la modulation de celui-ci.

2. Système selon la revendication 1, dans lequel ledit premier et ledit second signal (s1(t), (s2(t)) sont transmis simultanément.

3. Système selon la revendication 1 ou la revendication 2, dans lequel le premier et le second rayonnement optique sont transmis avec une transmission directive et ledit premier et ledit second module de transmission optique (99', 99") sont positionnés dans une position fixe et identifiant au moins une zone d'interférence du premier et du second rayonnement optique respectifs transmis.

4. Système selon l'une quelconque des revendications précédentes, dans lequel ledit module de réception optique (199) est conçu pour répliquer ledit premier signal (s1(t)) mixé avec ledit second signal (s2(t)) sans interruption, et/ou dans lequel ledit module de réception optique (199) a des moyens d'ajustement (214) pour le volume dudit signal électrique répliquant ledit signal audio transmis à travers ledit au moins un premier et/ou second module de transmission optique (99', 99"), dans lequel lesdits moyens d'ajustement de volume (214) comprennent une configuration fonctionnelle dans laquelle ils ajustent le volume dudit signal électrique de réplique (s'(t)) en fonction d'une proximité dudit module de réception optique respectivement par rapport audit premier et/ou audit second module de transmission optique (99', 99").

5. Système selon la revendication 4, dans lequel lesdits moyens d'ajustement de volume (214) comprennent une configuration fonctionnelle dans laquelle ils ajustent le volume dudit signal électrique de réplique (s'(t)) en fonction de l'intensité de lumière ou de l'éclairement lumineux dudit, et/ou produit par, ledit premier rayonnement optique et/ou ledit second rayonnement optique.

6. Système selon l'une quelconque des revendications 4 ou 5, dans lequel lesdits moyens d'ajustement (214) du volume dudit signal électrique de réplique (s'(t)) comprennent un limiteur ou un compresseur, définissant au moins un niveau d'enveloppe ou de puissance ou de lumière ou un éclairement lumineux maximal au-dessus duquel l'amplitude dudit signal électrique est limitée ou s'accroît selon une loi dérivée non proportionnelle avec une pente négative, également comme l'intensité de lumière ou l'éclairement dudit premier rayonnement optique et/ou dudit second rayonnement optique croît et/ou comme ledit module de réception optique s'approche dudit premier et/ou dudit second module de transmission optique.

7. Système selon l'une quelconque des revendications précédentes, dans lequel ledit module de réception optique (199) comprend une pluralité de démodulateurs AM (202) pouvant être sélectivement sélectionnés par un utilisateur et placés en parallèle, dans lequel chaque démodulateur AM (202) est conçu pour démoduler un signal sur une porteuse respective avec une fréquence différente par rapport aux fréquences des porteuses des démodulateurs AM restants de ladite pluralité de démodulateurs AM (202).

8. Système selon la revendication 7, dans lequel ledit module de réception optique (199) comprend un étage de filtrage (217) installé en amont de ladite pluralité de démodulateurs AM (202).

9. Procédé de diffusion de données à l'aide d'un rayonnement optique transmis par une pluralité de sources, comprenant :
- une étape d'émission d'un premier rayonnement optique modulé en amplitude, sur la base d'un premier signal au moins du type audio (s1(t)) agissant comme signal de modulation dudit premier rayonnement optique modulé en amplitude ;
- une étape d'émission d'un second rayonnement optique modulé en amplitude, sur la base d'un second signal au moins du type audio (s2(t)) agissant comme signal de modulation dudit second rayonnement optique, ledit premier et ledit second signal audio (s1(t), s2(t)) étant simultanément transmis ;
- une étape de positionnement d'un module de réception optique (199) comprenant au moins un photorécepteur (200) adapté pour recevoir ledit premier et/ou ledit second rayonnement optique et au moins un démodulateur AM (202) électriquement connecté audit au moins un photorécepteur (200), dans une zone dans laquelle ledit premier rayonnement optique et/ou ledit second rayonnement optique peuvent être reçus et dans laquelle, à travers ledit démodulateur AM (202), ledit module de réception optique (199) exécute une étape de génération d'un signal électrique de réplique (s'(t)) dudit signal au moins du type audio transmis à l'aide dudit premier et/ou dudit second rayonnement optique,
- dans ladite étape de génération :
- si seulement le premier rayonnement optique est reçu, ledit signal électrique de réplique (s'(t)) réplique ledit premier signal au moins du type audio (s1(t));
- si seulement le second rayonnement optique est reçu, ledit signal électrique de réplique (s'(t)) réplique ledit second signal au moins du type audio (s2(t)) ;
le procédé étant **caractérisé en ce que**, dans ladite étape de génération,
- si à la fois le premier rayonnement optique et le second rayonnement optique sont reçus simultanément, ledit signal électrique de réplique réplique ledit premier signal au moins du type audio (s1(t)) mixé avec ledit second signal au moins du type audio (s2(t)), l'intensité au moins instantanée de la réplique dudit premier signal au moins du type audio (s1(t)) et de la réplique dudit second signal au moins du type audio (s2(t)) est proportionnelle respectivement à l'intensité dudit premier rayonnement optique et/ou de la modulation de celui-ci, et à l'intensité dudit second rayonnement optique et/ou de la modulation de celui-ci.

10. Procédé selon la revendication 9, dans lequel le premier et le second rayonnement optique modulé en amplitude sont transmis par un premier et un second module de transmission optique (99', 99") respectif, dans lequel ledit procédé comprend une étape de positionnement dudit premier et dudit second module de transmission optique (99', 99") dans deux positions séparées l'une de l'autre.

11. Procédé selon la revendication 10, dans lequel ladite étape de positionnement dudit premier module de transmission optique (99') et dudit second module de transmission optique (99") comprenant une étape pour les positionner dans une position telle qu'un rayonnement optique de celui-ci est au moins partiellement chevauché dans au moins un intervalle de temps, optionnellement dans une région chevauchante (C) à laquelle à la fois le premier rayonnement optique et le second rayonnement optique peuvent être reçus simultanément.

12. Procédé selon la revendication 10 ou la revendication 11, dans lequel ladite étape de positionnement dudit premier module de transmission optique (99') et dudit second module de transmission optique (99") comprend une étape pour les positionner dans une position par laquelle un rayonnement optique de celui-ci présente au moins un lobe chevauchant et/ou interfère réciproquement.

13. Procédé selon l'une ou plusieurs des revendications précédentes 9 à 12, dans lequel ledit module de réception répliquent ledit premier signal au moins du type audio mixé avec ledit second signal au moins du type audio sans interruption.

14. Procédé selon l'une quelconque des revendications 10 à 13, comprenant une étape d'ajustement du volume dudit signal électrique de réplique (s'(t)) répliquant ledit signal au moins du type audio transmis par ledit au moins un premier et/ou un second module de transmission optique (99', 99"), dans lequel ladite étape d'ajustement du volume dudit signal électrique de réplique comprend l'ajustement du volume en fonction d'une proximité dudit module de réception optique (199) respectivement par rapport audit premier et/ou audit second module de transmission optique (99', 99").

15. Procédé selon la revendication 14, dans lequel le volume dudit signal électrique est ajusté en fonction de l'intensité de lumière ou de l'éclairement de, et/ou produit par, ledit premier rayonnement optique, et/ou dudit, et/ou produit par ledit, second rayonnement optique.
